# EUROPÄISCHE PATENTSCHRIFT

(11) **EP 1 459 947 B1**
(45) Veröffentlichungstag und Bekanntmachung des Hinweises auf die Patenterteilung: **03.05.2006**
(21) Anmeldenummer: 04005653.3
(22) Anmeldetag: 10.03.2004
(51) Int. Cl.: B60R 21/26

(54) **Aufblasvorrichtung für ein Fahrzeuginsassen-Rückhaltesystem**
Inflating device for a vehicle occupant restraint system
Dispositif de gonflage pour un système de retenue pour les occupants d'un véhicule

(30) Priorität: 11.03.2003 DE 20303836 U
(43) Veröffentlichungstag der Anmeldung: 22.09.2004
(73) Patentinhaber: TRW Airbag Systems GmbH, 84544 Aschau am Inn (DE)
(72) Erfinder: Ruckdeschel, Rolf, 87645 Schwangau (DE); Hofmann, Achim Dr., 84570 Polling (DE); Esau, Anja, 84539 Ampfing (DE)
(74) Vertreter: Sulzbach, Werner

(56) Entgegenhaltungen:
- EP-A- 0 728 632
- WO-A-01/12475
- WO-A-01/34516
- DE-A- 10 146 458

## Beschreibung

Die Erfindung betrifft eine Aufblasvorrichtung für ein Fahrzeuginsassen-Rückhaltesystem mit einem ersten pyrotechnischen Gasgenerator, der einen schnurförmigen Treibstoffstrang und einen dem Treibstoffstrang zugeordneten Anzünder aufweist, und einem zweiten pyrotechnischen Gasgenerator mit einem Gehäuse und in dem Gehäuse angeordneten Treibstoffelementen.

Aufblasvorrichtungen mit schnurförmigem Treibstoffstrang werden überall dort verwendet, wo eine besonders rasche Gaserzeugung erfolgen soll. So zeigt die DE 41 34 995 C1 ein Seitenaufprallschutzsystem für Insassen eines Kraftfahrzeugs, bei dem ein Treibstoffstrang in einer Gaserzeugerschnur benutzt wird, welche das Gas unmittelbar an der benötigten Stelle erzeugt und damit zeitaufwendige Strömungsvorgänge vermeidet. Solche Systeme weisen die bei einem Seitenaufprall erforderlichen kurzen Reaktionszeiten auf. Aufblasvorrichtungen mit schnurförmigen Treibstoffsträngen können beliebig geformte Flächen aufspannen, wodurch eine sehr gute Anpassung von Seitenaufprallschutzsystemen an die räumlichen Bedingungen in einem Kraftfahrzeug möglich ist.

Außerdem wurde bereits vorgeschlagen, die bekannten Gasgeneratoren mit schnurförmigen Treibstoffsträngen in Kombination mit weiteren pyrotechnischen Gasgeneratoren zu verwenden. Diese Kombinationen werden eingesetzt, wenn das Gas über einen längeren Zeitraum als die Abbranddauer des schnurförmigen Treibstoffstrangs freigesetzt werden soll. In der DE 101 46 458 A1 ist eine derartige gattungsbildende Kombination aus einem Gasgenerator mit schnurförmigem Treibstoffstrang (Schnurgasgenerator) und einem zweiten pyrotechnischen Gasgenerator mit herkömmlichen Treibstoffelementen offenbart, wobei der zweite pyrotechnische Gasgenerator über einen Verbindungskanal mit dem Schnurgasgenerator verbunden ist.

Da in einer solchen Kombination die vom schnurförmigen Treibstoffstrang des ersten pyrotechnischen Gasgenerators freigesetzten Verbrennungsprodukte vorwiegend gasförmig sind, können diese unter Umständen so weit abkühlen, daß der zweite pyrotechnische Gasgenerator mit den Treibstoffelementen nicht mehr sicher gezündet werden kann. Die DE 101 46 458 A1 schlägt deshalb auch eine Zündverstärkung mit einer am Verbindungskanal angeordneten Booster-Ladung vor.

Die Erfindung schafft demgegenüber eine einfach aufgebaute und kostengünstig herstellbare Aufblasvorrichtung für ein Fahrzeuginsassen-Rückhaltesystem mit zwei pyrotechnischen Gasgeneratoren der eingangs beschriebenen Art, die dadurch gekennzeichnet ist, daß der schnurförmige Treibstoffstrang durch das Gehäuse des zweiten pyrotechnischen Gasgenerators geführt ist, wobei der schnurformige Treibstoffstrang und die Treibstoffelemente so miteinander in Verbindung stehen, daß die Zündung der Treibstoffelemente des zweiten pyrotechnischen Gasgenerators durch von dem schnurförmigen Treibstoffstrang des ersten pyrotechnischen Gasgenerators freigesetzte Verbrennungsprodukte erfolgt.

Die von dem im Gehäuse des zweiten pyrotechnischen Gasgenerators befindlichen Abschnitt des schnurförmigen Treibstoffstrangs freigesetzten Verbrennungsprodukte können somit schnell auf die in unmittelbarer Nähe befindlichen Treibstoffelemente des zweiten pyrotechnischen Gasgenerators einwirken und diese ohne Verzögerung zünden. Damit wird außerdem erreicht, daß der Anzünder der Aufblasvorrichtung in einer Kaskade zuerst den schnurförmigen, gaserzeugenden Treibstoffstrang zündet, und dann durch die daraus freigesetzten heißen Gase die den Treibstoffstrang umgebenden Treibstoffelemente aktiviert werden.

Schnurförmige Treibstoffstränge im Sinne der Erfindung sind solche, die ein Verhältnis der Länge zum Durchmesser von etwa ≥ 50, besonders bevorzugt ≥ 100, aufweisen.

In einer Ausführungsform der Erfindung hat der erste pyrotechnische Gasgenerator (Schnurgasgenerator) ein durchgehendes Gehäuse aus einem druckfesten Material, welches durch das Gehäuse des zweiten Gasgenerators geführt ist. In dem Gehäuse des Schnurgasgenerators sind Öffnungen für den Gasaustritt vorgesehen, die mit der Aufblasvorrichtung in Strömungsverbindung stehen. In seinem durch das Gehäuse des zweiten Gasgenerators geführten Abschnitt weist das Gehäuse des Schnurgasgenerators ferner Überströmöffnungen auf, mit denen eine Fluidverbindung zwischen dem ersten und dem zweiten Gasgenerator bzw. dem Treibstoffstrang und den Treibstoffelementen hergestellt wird, so daß einerseits die aus dem Treibstoffstrang freigesetzten Verbrennungsprodukte hindurchtreten und die Treibstoffelemente des zweiten pyrotechnischen Gasgenerators zünden können, und andererseits die danach aus den Treibstoffelementen freigesetzten Gase über die Überströmöffnungen und die Gasaustrittsöffnungen der aufblasbaren Sicherheitseinrichtung, beispielsweise einem Gassack, zugeführt werden können.

In einer weiteren Ausführungsform umgibt das Gehäuse des Schnurgasgenerators den schnurförmigen Treibstoffstrang nur außerhalb des zweiten pyrotechnischen Gasgenerators. Das Gehäuse des Schnurgasgenerators grenzt hier also an das Gehäuse des zweiten pyrotechnischen Gasgenerators an, und der durch dieses Gehäuse geführte schnurförmige Treibstoffstrang steht in direkter Verbindung mit den Treibstoffelementen des zweiten Gasgenerators. Die von dem im Gehäuse des zweiten Gasgenerators befindlichen Abschnitt des schnurförmigen Treibstoffstrangs freigesetzten Verbrennungsprodukte wirken hier also unmittelbar auf die Treibstoffelemente des zweiten pyrotechnischen Gasgenerators ein.

Die Treibstoffelemente können Treibstofftabletten bekannter Form und Abmessungen sein, die in einer Schüttung angeordnet sind. Diese Schüttung kann den schnurförmigen Treibstoffstrang unmittelbar umgeben und diesen berühren. Damit können die freigesetzten Verbrennungsprodukte weder abkühlen noch anderweitig Energie verlieren, bis sie die Treibstofftabletten erreichen.

In einer weiteren bevorzugten Ausführung können die Treibstoffelemente im zweiten pyrotechnischen Gasgenerator auch hohlzylinderförmig und der Treibstoffstrang kann durch den Zylinderhohlraum geführt sein, so daß jedes hohlzylinderförmige Treibstoffelement den schnurförmigen Treibstoffstrang umfangsmäßig umschließt. Da die Verbrennungsprodukte des schnurförmigen Treibstoffstrangs in der Regel in alle Richtungen radial nach außen abgegeben werden, müssen sie in dieser Ausführungsform an der Innenseite der hohlzylinderförmigen Treibstoffelemente auftreffen und diese zwangsläufig entzünden.

Bevorzugt ist insbesondere, wenn die Treibstoffelemente eine wesentlich längere Abbrandzeit haben als der schnurförmige Treibstoffstrang. Auf diese Weise stellen die Treibstoffelemente des zweiten pyrotechnischen Gasgenerators zusätzlich Gas zum Betrieb der Aufblasvorrichtung bereit, wobei die Standzeit der Airbags gegenüber Ausführungen mit reinen Schnurgasgeneratoren deutlich vergrößert wird.

Weitere Vorteile der Erfindung ergeben sich aus der nachfolgenden Beschreibung bevorzugter Ausführungsformen und der Zeichnung. In der Zeichnung zeigen:
- Figur 1 einen Querschnitt durch eine erste Ausführungsform einer erfindungsgemäßen Aufblasvorrichtung, und
- Figur 2 einen Schnitt durch eine zweite Ausführungsform der erfindungsgemäßen Aufblasvorrichtung.

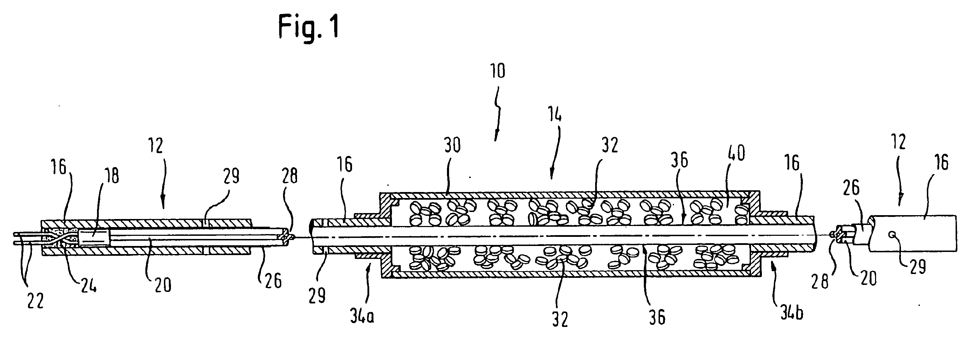

Die in Figur 1 dargestellte bevorzugte Ausführungsform einer Aufblasvorrichtung 10 umfaßt einen ersten pyrotechnischen Gasgenerator 12 und einen zweiten pyrotechnischen Gasgenerator 14.

Der erste pyrotechnische Gasgenerator 12 hat ein Gehäuse 16, vorzugsweise aus einem druckfesten Material, wobei in dem Gehäuse ein Anzünder 18 und ein an den Anzünder angrenzender schnurförmiger Treibstoffstrang 20 zur Erzeugung von Gasen angeordnet sind. Der Anzünder 18 weist zwei nach außen führende Anschlußstifte auf und ist durch eine Feuchtesperre 24 nach außen hin abgedichtet. Zwischen dem Anzünder 18 und dem schnurförmigem Treibstoffstrang 20 einerseits und dem ersten Gehäuse 16 andererseits befindet sich noch eine Dämmschicht 26, die ebenfalls das Einwirken von Feuchtigkeit auf den schnurformigen Treibstoffstrang verhindern soll. Der schnurförmige Treibstoffstrang 20 hat einen kreuzförmigen Querschnitt, wodurch Durchgangskanäle 28 in Längsrichtung des ersten pyrotechnischen Gasgenerators 12 ausgebildet werden. Im Gehäuse 16 sind außerdem Öffnungen 29 für den Gasaustritt angeordnet, die mit einem der Aufblasvorrichtung 10 nachgeordneten Airbag (nicht gezeigt) in Strömungsverbindung stehen.

Der zweite pyrotechnische Gasgenerator 14 ist auf einem beliebigen Längenabschnitt des ersten Gasgenerators 12 angeordnet und weist ein zweites, vorzugsweise geschlossenes, Gehäuse 30 auf, welches eine Treibstoffkammer 40 abgrenzt, in der Treibstoffelemente 32 angeordnet sind. Das zweite Gehäuse 30 ist in Verbindungsbereichen 34a und 34b an gegenüberliegenden Seiten des Gehäuses 30 in geeigneter Weise, z.B. durch Schweißen, Löten oder Kleben, fest mit dem ersten Gehäuse 16 verbunden. Die Strecke zwischen dem Verbindungsbereich 34a und dem Verbindungsbereich 34b stellt einen Kontaktabschnitt 36 zwischen dem ersten pyrotechnischen Gasgenerator 12 bzw. dem Treibstoffstrang 20 und dem zweiten pyrotechnischen Gasgenerator 14 bzw. den Treibstoffelementen 32 dar, in dem der Treibstoffstrang 20 durch das Gehäuse 30 geführt ist.

In der in Fig. 1 dargestellten Ausführungsform umschließt der zweite pyrotechnische Gasgenerator 14 im Kontaktabschnitt 36 vollständig den Umfang des ersten pyrotechnischen Gasgenerators. Das Gehäuse 16 des ersten pyrotechnischen Gasgenerators 12 grenzt hier an das Gehäuse 30 des zweiten pyrotechnischen Gasgenerators 14 an, während der Treibstoffstrang 20 im Verbindungsbereich 34a in das Gehäuse 30 eintritt, im Kontaktabschnitt 36 durch das Gehäuse 30 des zweiten Gasgenerators 14 hindurch geführt ist und im Verbindungsbereich 34b aus dem Gehäuse 34b austritt. Der schnurförmige Treibstoffstrang 20 hat also im Kontaktabschnitt 36 kein eigenes Gehäuse, sondern steht in unmittelbarem Kontakt mit den Treibstoffelementen 32, die vorzugsweise als Treibstofftabletten ausgeführt und in einer Schüttung angeordnet sind. Gegebenenfalls kann jedoch die Dämmschicht 26 als dünne Aluminiumfolie oder als Verbundwerkstoff auf der Grundlage von Aluminium und Kunststoff ausgebildet sein und den Treibstoffstrang auch im Kontaktabschnitt 36 umgeben. Dadurch kann die mechanische Stabilität des Treibstoffstrangs verbessert werden.

Im folgenden wird die Funktionsweise dieser Ausführungsform der Aufblasvorrichtung dargestellt:

Sobald ein im Fahrzeug angeordneter Sensor einen Fahrzeugunfall feststellt, erreicht ein elektrisches Signal den Anzünder 18 über die Anschlußstifte 22. Der Anzünder 18 erzeugt eine Gasdruckwelle, die in den vom kreuzförmigen Treibstoffstrang 20 gebildeten Durchgangskanälen 28 entlang des gesamten Schnurgasgenerators weitergeleitet wird. Dadurch wird der schnurförmige Treibstoffstrang 20 überall an seiner Oberfläche sehr rasch, d.h. innerhalb weniger Millisekunden, entzündet. Die vom schnurförmigen Treibstoffstrang 20 freigesetzten Gase können z.B. einen nachgeordneten Airbag über die Gasaustrittsöffnungen 29 in der geforderten kurzen Zeit aufblasen.

Im Kontaktabschnitt 36 aktivieren die vom schnurförmigen Treibstoffstrang 20 freigesetzten Verbrennungsprodukte unmittelbar die Treibstoffelemente 32 im zweiten Gasgenerator. Die aktivierten Treibstoffelemente 32 setzen eine sehr große Gasmenge frei, die - da das Gehäuse des zweiten Gasgenerators geschlossen ist und keine Gasaustrittsöffnungen aufweist - ebenfalls über die Gasaustrittsöffnungen 29 im Schnurgasgenerator abfließt und dafür sorgt, daß der nachgeordnete (nicht dargestellte) Airbag noch über einen längeren Zeitraum mit Gas versorgt wird und aufgeblasen bleibt. Das Gas wird dann nicht nur für wenige Millisekunden (typischerweise < 10 ms) allein vom schnurförmigen Treibstoffstrang bereitgestellt, sondern über einen Zeitraum von bis zu mehreren Sekunden produziert. Durch die daraus resultierende Verlängerung der Standzeit des aufgeblasenen Airbags wird dessen Schutzwirkung deutlich verbessert, insbesondere in Unfallsituationen, in denen der Fahrzeuginsasse innerhalb gewisser Zeit mehrmals Schutz durch den Airbag benötigt.

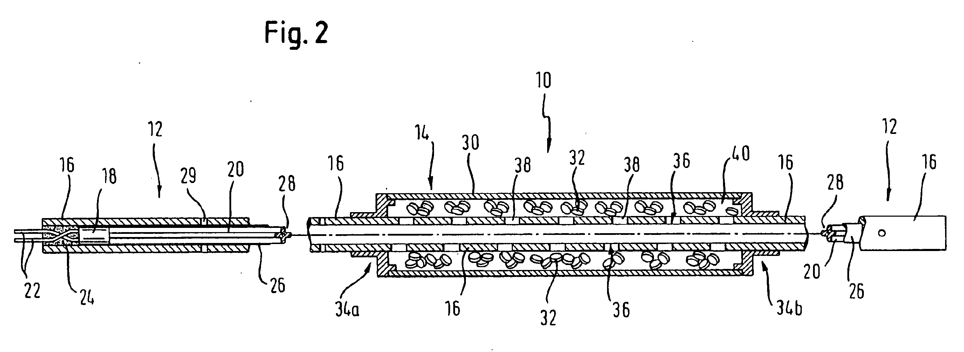

Figur 2 zeigt in einer weiteren Ausführungsform die Aufblasvorrichtung 10 mit den beiden pyrotechnischen Gasgeneratoren 12 und 14, wobei Teile gleicher Funktion mit gleichen Bezugszeichen versehen sind. Die Aufblasvorrichtung gemäß Figur 2 ist weitgehend in gleicher Weise ausgeführt wie die erste Ausfiihrungsform, wobei der schnurförmige Treibstoffstrang 20 jedoch auch im Bereich des Kontaktabschnitts 36 von dem ersten Gehäuse 16, vorzugsweise aus druckfestem Material, umgeben ist. Im Kontaktabschnitt 36 weist das erste Gehäuse 16 Überströmöffnungen 38 auf, durch die nach der Aktivierung des ersten Gasgenerators eine Fluidverbindung zwischen dem schnurförmigem Treibstoffstrang 20 und der Treibstoffkammer 40 besteht. Bei dieser Ausführungsform ist der Treibstoffstrang gegenüber mechanischen Belastungen besser geschützt.

Die Funktionsweise der zweiten Ausführungsform ähnelt der der ersten Ausführungsform.

Nach der Aktivierung des Anzünders 18 läuft eine Druckwelle entlang des gesamten schnurförmigen Treibstoffstrangs 20, worauf dieser entzündet wird. Die vom schnurförmigen Treibstoffstrang 20 freigesetzten Verbrennungsprodukte treten im Kontaktabschnitt 36 durch die Überströmöffnungen 38 in die Treibstoffkammer 40 über, wodurch die Treibstoffelemente 32 aktiviert werden. Die von den Treibstoffelementen 32 freigesetzten Gase treten über die Überströmöffnungen 38 und die Gasaustrittsöffnungen 29 aus den Gasgeneratoren 12, 14 aus, um in eine (nicht dargestellte) aufblasbare Fahrzeuginsassenschutzeinrichtung, beispielsweise einen Airbag, zu gelangen.

Auch bei dieser Ausführungsform wird die Standzeit des Airbags deutlich vergrößert. Während der schnurförmige Treibstoffstrang 20 in der Regel bereits nach wenigen Millisekunden abgebrannt ist, beträgt die Brenndauer der Treibstoffelemente 32 bis zu mehreren Sekunden, so daß der Gassack auch einen mehrfachen Aufprall von Fahrzeuginsassen abfangen kann.

## Patentansprüche

1. Aufblasvorrichtung (10) für ein Fahrzeuginsassen-Rückhaltesystem mit einem ersten pyrotechnischen Gasgenerator (12), der einen schnurförmigen Treibstoffstrang (20) und einen dem Treibstoffstrang zugeordneten Anzünder (18) aufweist, und einem zweiten pyrotechnischen Gasgenerator (14) mit einem Gehäuse (30) und in dem Gehäuse (30) angeordneten Treibstoffelementen (32), **dadurch gekennzeichnet, daß** der schnurförmige Treibstoffstrang (20) durch das Gehäuse (30) des zweiten pyrotechnischen Gasgenerators (14) hindurch geführt ist, wobei der schnurförmige Treibstoffstrang (20) und die Treibstoffelemente (32) so miteinander in Verbindung stehen, daß die Zündung der Treibstoffelemente (32) durch von dem Treibstoffstrang (20) des ersten pyrotechnischen Gasgenerators (12) freigesetzte Verbrennungsprodukte erfolgt.

2. Aufblasvorrichtung nach Anspruch 1, **dadurch gekennzeichnet, daß** der erste pyrotechnische Gasgenerator ein Gehäuse (16) mit Überströmöffnungen (38) aufweist, durch die vom Treibstoffstrang (20) freigesetzten Verbrennungsprodukte hindurchtreten, wobei das Gehäuse (16) des ersten pyrotechnischen Gasgenerators (12) mit den Überströmöffnungen (38) durch das Gehäuse (30) des zweiten pyrotechnischen Gasgenerators (14) hindurch geführt ist.

3. Aufblasvorrichtung nach Anspruch 1, **dadurch gekennzeichnet, daß** das Gehäuse (16) des ersten pyrotechnischen Gasgenerators (14) an das Gehäuse (30) des zweiten pyrotechnischen Gasgenerators (14) angrenzt, und der durch das Gehäuse (30) des zweiten Gasgenerators (14) hindurch geführte Treibstoffstrang (20) direkt mit den Treibstoffelementen in Verbindung steht.

4. Aufblasvorrichtung nach einem der vorhergehenden Ansprüche, **dadurch gekennzeichnet, daß** die Treibstoffelemente (32) Treibstofftabletten sind, die in einer Schüttung angeordnet sind.

5. Aufblasvorrichtung nach einem der Ansprüche 1 bis 3, **dadurch gekennzeichnet, daß** die Treibstoffelemente (32) hohlzylinderförmig sind und jedes hohlzylinderförmige Treibstoffelement (32) den Treibstoffstrang (20) im Gehäuse (30) des zweiten pyrotechnischen Gasgenerators (14) umfangsmäßig umschließt.

6. Aufblasvorrichtung nach einem der vorhergehenden Ansprüche, **dadurch gekennzeichnet, daß** die Treibstoffelemente (32) eine längere Abbrandzeit aufweisen als der Treibstoffstrang (20).

## Claims

1. An inflation device (10) for a vehicle occupant restraint system, comprising a first pyrotechnic gas generator (12), which has a cord-type fuel line (20) and an igniter (18) associated with the fuel line, and a second pyrotechnic gas generator (14) having a housing (30) and fuel elements (32) arranged in the housing (30), **characterized in that** the cord-type fuel line (20) passes through the housing (30) of the second pyrotechnic gas generator (14), the cord-type fuel line (20) and the fuel elements (32) being in connection with each other such that the ignition of the fuel elements (32) is effected by combustion products released by the fuel line (20) of the first pyrotechnic gas generator (12).

2. The inflation device according to Claim 1, **characterized in that** the first pyrotechnic gas generator has a housing (16) with overflow openings (38), through which combustion products released by the fuel line (20) pass, the housing (16) of the first pyrotechnic gas generator (12) with the overflow openings (38) passing through the housing (30) of the second pyrotechnic gas generator (14).

3. The inflation device according to Claim 1, **characterized in that** the housing (16) of the first pyrotechnic gas generator (14) adjoins the housing (30) of the second pyrotechnic gas generator (14), and the fuel line (20) passing through the housing (30) of the second gas generator (14) is in direct connection with the fuel elements.

4. The inflation device according to any of the preceding claims, **characterized in that** the fuel elements (32) are fuel tablets which are arranged in a fill.

5. The inflation device according to any of Claims 1 to 3, **characterized in that** the fuel elements (32) are of hollow cylindrical shape and each hollow cylindrical fuel element (32) peripherally surrounds the fuel line (20) in the housing (30) of the second pyrotechnic gas generator (14).

6. The inflation device according to any of the preceding claims, **characterized in that** the fuel elements (32) have a longer combustion time than the fuel line (20).

## Revendications

1. Dispositif de gonflage (10) pour un système de retenue de passager de véhicule, comportant un premier générateur de gaz (12) pyrotechnique qui présente un brin de combustible (20) en forme de cordon et un allumeur (18) associé au brin de combustible, et un deuxième générateur de gaz (14) pyrotechnique avec un boîtier (30) et des élément combustibles (32) agencés dans le boîtier (30), **caractérisé en ce que** le brin de combustible (20) en forme de cordon est guidé à travers le boîtier (30) du deuxième générateur de gaz (14) pyrotechnique, le brin de combustible (20) en forme de cordon et les éléments combustibles (32) étant en liaison l'un avec les autres de telle sorte que l'allumage des éléments combustibles (32) a lieu par des produits de combustion dégagés par le brin de combustible (20) du premier générateur de gaz (12) pyrotechnique.

2. Dispositif de gonflage selon la revendication 1, **caractérisé en ce que** le premier générateur de gaz pyrotechnique présente un boîtier (16) avec des orifices de trop-plein (38) à travers lesquels passent les produits de combustion dégagés par le brin de combustible (20), le boîtier (16) du premier générateur de gaz (12) pyrotechnique étant guidé à travers le boîtier (30) du deuxième générateur de gaz (14) pyrotechnique.

3. Dispositif de gonflage selon la revendication 1, **caractérisé en ce que** le boîtier (16) du premier générateur de gaz (14) pyrotechnique est adjacent au boîtier (30) du deuxième générateur de gaz (14) pyrotechnique, et le brin de combustible (20) guidé à travers le boîtier (30) du deuxième générateur de gaz (14) étant directement en communication avec les éléments combustibles.

4. Dispositif de gonflage selon l'une des revendications précédentes, **caractérisé en ce que** les éléments combustibles (32) sont des pastilles de combustible qui sont agencées en vrac.

5. Dispositif de gonflage selon l'une des revendications 1 à 3, **caractérisé en ce que** les éléments combustibles (32) sont en forme de cylindres creux, et chaque élément combustible (32) en forme de cylindre creux entoure sur la périphérie le brin de combustible (20) dans le boîtier (30) du deuxième générateur de gaz (14) pyrotechnique.

6. Dispositif de gonflage selon l'une des revendications précédentes, **caractérisé en ce que** les éléments combustibles (32) présentent un temps de combustion plus long que le brin de combustible (20).
